# EUROPÄISCHE PATENTSCHRIFT

(11) **EP 1 686 102 B1**
(45) Veröffentlichungstag und Bekanntmachung des Hinweises auf die Patenterteilung: **30.03.2011**
(21) Anmeldenummer: 06000809.1
(22) Anmeldetag: 16.01.2006
(51) Int. Cl.: C04B 28/02

(54) **Estrich**
Screed
Chape

(30) Priorität: 26.01.2005 AT 1192005
(43) Veröffentlichungstag der Anmeldung: 02.08.2006
(73) Patentinhaber: Stallit Gesellschaft m.b.H., 8783 Gaishorn am See (AT)
(72) Erfinder: Reinbacher, Johann, 8784 Trieben (AT)
(74) Vertreter: Secklehner, Günter

(56) Entgegenhaltungen:
- WO-A-02/20421
- WO-A-95/18775
- DE-A1- 1 953 446
- KR-B1- 970 010 343
- US-A1- 2003 125 425

## Beschreibung

Die Erfindung betrifft die Verwendung einer Formulierung zur Herstellung eines Estrichs für Stallungen entsprechend dem Oberbegriff des Anspruches 1, sowie ein Spaltenbodenelement aus Beton, entsprechend dem Oberbegriff des Anspruches 13.

Die Anforderungen an Böden für die Großtierhaltung sind in den vergangenen Jahren·ständig gestiegen, da zunehmend der Zusammenhang zwischen Bodengestaltung und Gesundheit der Tiere und damit auch der Wirtschaftlichkeit eines landwirtschaftlichen Betriebes erkannt wird. Dadurch haben sich verschiedene Systeme der Bodenausführung mit jeweils spezifischen Vor- und Nachteilen entwickelt.

Der noch immer häufig verwendete, reine Betonboden ist zwar sehr günstig herzustellen, dieser wird aber durch die Verschmutzung mit Kot und Harn der Tiere regelmäßig rutschig und birgt deshalb eine relativ hohe Verletzungsgefahr für die Tiere. Um auch im verschmutzten Zustand eine gewisse Rutschhemmung zu erreichen, werden Betonböden häufig profiliert ausgeführt, was die Herstellung jedoch wieder verteuert. Durch die harte Oberfläche wird das Klauenwachstum der Tiere angeregt und gleichzeitig eine natürliche Abnutzung bewirkt. Durch den Klauenabrieb nimmt die Rauheit der Oberfläche und damit die Rutschsicherheit solcher Böden im Laufe der Zeit ab.

Eine weitere Ausführungsform von Betonböden sind so genannte Betonspaltenböden bei denen die Exkremente der Tiere durch Spalten in darunter liegende Sammelkanäle gelangen. Diese Spaltenböden sind meist durch freitragende Betonfertigteile mit Schlitzen gebildet und müssen gemäß verschiedener nationaler oder internationaler Normen z.B. ÖNORM EN 12737 bestimmte Anforderungen unter anderem bezüglich Werkstofffestigkeit und Oberflächenbeschaffenheit erfüllen. Da ein Großteil der Exkremente durch die Spalten in die Sammelkanäle abgeführt wird, besitzen solche Böden einen gewissen Selbstreinigungseffekt, ansonsten entsprechen die Eigenschaften weitgehend denen herkömmlicher Betonböden.

Eine Möglichkeit die Rutschfestigkeit von Betonböden zu verbessern besteht darin, auf die gereinigte Betonoberfläche eine dünne Schicht körniges Material wie Quarzsand oder Gummigranulat mit einem Bindemittel z.B. Epoxidharz aufzutragen. Aufgrund relativ hoher Kosten und einer begrenzten Haltbarkeit wird diese Anwendung oft auf kleinere Flächen begrenzt.

Profilierte Gummimatten als Bodenbelag sind aufgrund ihrer Nachgiebigkeit für die Trittsicherheit der Tiere vorteilhaft und gut wärmedämmend, aber ebenfalls relativ teuer und haben auch eine begrenzte Lebensdauer.

In der Patentschrift DE 1 953 446 C ist ein Estrich beschrieben, der die Vorteile eines Betonbodens mit der Nachgiebigkeit von Gummi kombinieren sollte. Dieser Estrich mit Zement oder Kunstharz als Bindemittel enthält mineralische Zuschlagstoffe, teilweise vulkanischen Ursprungs, mit einer Korngröße zwischen 0,2 mm und 7 mm sowie etwa 10 Vol.-% bis 50 Vol.-% Gummischrot aus recycelten Autoreifen mit Korngrößen von etwa 3 mm bis 25 mm. Durch diese Zusammensetzung entsteht ein wärmedämmender und zähelastischer Belag mit einer verbesserten Trittsicherheit für die Tiere.

Von Nachteil bei dieser Zusammensetzung ist allerdings eine begrenzte mechanische Festigkeit und Verschleißhärte durch das grobkörnige Gummigranulat, das die Festigkeit stark herabsetzt und eine ebenfalls durch das grobkörnige Gummigranulat verursachte, relativ inhomogene Oberflächenstruktur, die die Reinigung dieser Bodenart erschwert, insbesondere, wenn größere Gummiteile bei Beanspruchung durch die Klauen aus der Oberfläche herausgerissen werden.

Aufgabe der Erfindung ist es einen verbesserten Estrich für Stallungen bereitzustellen, der vielseitig und wirtschaftlich vorteilhaft eingesetzt werden kann.

Diese Aufgabe der Erfindung wird durch die in den Patentansprüchen 1 und 13 angegebenen Merkmale jeweils eigenständig gelöst. Durch die Verwendung eines Quarzsandes mit der angegebenen Korngröße kann durch den enthaltenen Feinkornanteil eine hohe Grundfestigkeit des Estrichs erzielt werden, die für den Einsatz in hochbelasteten Bereichen vorteilhaft und teilweise auch vorgeschrieben ist, wie z.B. bei den oben erwähnten Betonspaltenböden. Durch die erfindungsgemäße Zusammensetzung kann der Estrich eine Druckfestigkeit von etwa 67,5 N/mm² bei Prüfung gemäß ÖNORM EN 12390 erreichen, womit auch die Einhaltung der Festigkeitsanforderungen aus ÖNORM EN 12737 eingehalten werden können. Das fertige Material ist gegenüber dem in der DE 1 953 446 C genannten Estrich insgesamt dichter und auch leichter zu reinigen, da die im Gebrauch der Böden entstehenden Ausbrüche aufgrund der höheren Festigkeit und kleineren verwendeten Korngrößen geringer bzw. kleiner sind.

Durch den Anteil an Gummigranulat ist die Rutschsicherheit für die Tiere verbessert und weiters die Wirksamkeit von Hochdruckreinigern gegenüber Estrich ohne elastischen Zuschlagstoff deutlich erhöht, da die elastischen Gummikörner im Reinigungsstrahl etwas nachgeben und die Schmutzschicht dadurch leichter abgehoben und weggespült wird. Für die Entfernung von Klauenabrieb ist bei herkömmlichem Estrich ohne elastischen Zuschlagstoff ein Reinigungsdruck von über 300 bar erforderlich, wogegen beim erfindungsgemäßen Estrich ein Reinigungsdruck von nur 200 bar ausreichend ist.

Die Verwendung von Fasern als Zuschlagstoff verbessert unter anderem die Zugfestigkeit des Estrichmaterials und beugt damit der Bildung von Schwundrissen vor, die Ausgangspunkt von Schäden sind und die Lebensdauer des Estrichs stark herabsetzen können.

Eine verbesserte Rutschsicherheit des Estrichs wird durch die Merkmale nach Anspruch 2 bzw. 14 erreicht, da das gebrochene Korn scharfe Bruchkanten aufweist und der Estrich dadurch eine rauere Oberfläche erhält.

Durch die Ausführung der Formulierung gemäß den Ansprüchen 3 und 15 wird der Estrich leichter verarbeitbar und kann auch in relativ dünnen Schichten aufgebracht werden. Weiters ist bei gleichem Volumenanteil eine gleichmäßigere Verteilung des Gummigranulats erreichbar als mit größeren Korngrößen, wodurch lokale Anhäufungen von Gummi vermieden und somit keine Stellen mit stark herabgesetzter Festigkeit entstehen.

Von Vorteil ist ein Volumenanteil des Gummigranulats gemäß Anspruch 4 bzw. 16, wodurch die Festigkeit gegenüber herkömmlichem Estrich nur unwesentlich gesenkt wird, die Effekte der verbesserten Trittsicherheit und leichteren Reinigung aber schon wirksam sind.

Die Verwendung von Gummigranulat aus recyceltem Fahrzeugreifen nach Anspruch 5 bzw. 17 bewirkt niedrigere Materialkosten und ist durch die stoffliche Verwertung von Altreifen ein Beitrag zur Ressourcenschonung.

Gummigranulat gemäß Anspruch 6 bzw. 18 ist vorteilhaft für die Haltbarkeit und Reinigung des Estrichs, da durch Gewebefasern geringe Mengen an Flüssigkeiten (Wasser, Harn) in das Innere des Estrichs geleitet werden, wodurch Hygieneprobleme und Frostschäden verursacht werden können. Weiters kann, wenn im Granulat enthaltene Stahldrahtstücke durch Abnützung freigelegt werden, die Gefahr von Verletzungen entstehen. Darüber hinaus kann in ungünstigen Fällen Korrosion von den Stahldrahtteilen auf die Stahlbewehrung z.B. von Spaltenbodenelementen oder anderen Bodenkonstruktionen übergreifen.

Beim Abfräsen von gebrauchten LKW-Reifen als Vorbereitung für einen Runderneuerungsprozess fällt derartiges Gummimaterial an, womit auch hier wiederverwertetes Material eingesetzt werden kann.

Der Einsatz von Fasern gemäß Patentanspruch 7 bzw. 19 verbessert gleich mehrere Eigenschaften des Estrichs. Besonders vorteilhaft ist die Verwendung von im Schmelzspinnverfahren hergestellten, ungekräuselten Polypropylen-Stapelfasern aus isotaktischem Polypropylen. Diese bewirken eine geringe Streuung der Festigkeitswerte, Reduzierung bzw. Verhinderung von Schwindrissen und dadurch vermindertes Wassereindringvermögen, erhöhte Frostbeständigkeit, erhöhte Wasserdichtheit sowie stark erhöhten mechanischen Widerstand (Schlagzähigkeit, Abriebfestigkeit).

Die Fasern besitzen einen Durchmesser von etwa 20µm bis 50 µm und sind in Längen von 4 mm bis 30 mm einsetzbar. Die Fasergröße kann auch über die Anzahl je kg Fasern definiert werden, wobei sich ein Wert von etwa 36 Mio. Fasern/kg als vorteilhaft erweist.

Neben Polypropylenfasern können auch Fasern aus anderen Kunststoffen sowie Glasfasern verwendet werden.

Um die Fasern in der Zementsteinmatrix gleichmäßig zu verteilen, können die Fasern der Trockenmischung beigemengt werden oder aber auch nach der Wasserdosierung beigegeben werden.

Die Dosierung der Polypropylenfasern gemäß Anspruch 8 bzw. 20 ergibt ein ausgewogenes Verhältnis zwischen Verbesserung der Estricheigenschaften laut obigen Ausführungen und sparsamem Materialeinsatz. Durch die angegebene Dosierung wird auch die Verarbeitbarkeit des Estrichs verbessert.

Die Wassermenge, die der Formulierung zugesetzt wird, kann gemäß Anspruch 9 gewählt werden.

Der Estrich kann nach Anspruch 10 bzw. 21 auch in relativ dünnen Schichten aufgebracht werden, wobei die verwendete Korngröße des Gummigranulats zu berücksichtigen ist. Dadurch ergibt sich ein sparsamer Materialverbrauch bei unverändert vorteilhaften Eigenschaften. Für eine gute Verbindung mit dem Unterbeton ist dabei vorteilhaft, dass der Estrich auf dem noch frischen, gut verdichteten und ebenen Unterbeton aufgebracht wird und ebenfalls gut verdichtet wird. Nach einer gründlichen Reinigung und Aufbringung eines Haftvermittlers kann der Estrich auch zur nachträglichen Oberflächenverbesserung von bestehenden Betonböden verwendet werden.

Vorteilhaft kann der Estrich gemäß Anspruch 11 auch direkt bei der Herstellung von Spaltenbodenelementen als Nutzschicht aufgebracht werden. Die bei herkömmlichen Betonoberflächen bestehende Rutschgefahr wird durch den erfindungsgemäßen Estrich verringert.

Für eine weiter verbesserte Rutschsicherheit kann die Oberfläche des Estrichs nach Anspruch 12 bzw. 22 auch profiliert ausgeführt sein. Dazu werden vorteilhafterweise in den noch weichen Estrich durch Stempel, Walzen oder sonstige Werkzeuge mit erhabenen Profilen über die Oberfläche verteilte Rillen in zumindest zwei verschiedenen Richtungen eingedrückt. Ein Rautenmuster ist für die mechanische Reinigung solcher Böden zweckmäßig.

Die Aufbringung des Estrichs auf den Unterbeton eines Betonspaltenbodenelements direkt bei der Herstellung, ergibt eine sehr gute Haftung und verkürzt gleichzeitig die Herstellungsdauer des erfindungsgemäßen Spaltenbodenelements.

Die Erfindung wird im nachfolgenden anhand eines in einer Zeichnung dargestellten Ausführungsbeispiels näher erläutert.

Es zeigen:
- Fig. 1: eine Ansicht eines Spaltenbodenelements mit dem erfindungsgemäßen Estrich;
- Fig. 2: eine typische Sieblinie eines bevorzugten mineralischen Zuschlagstoffes.

Einzelmerkmale oder Merkmalskombinationen aus den beschriebenen unterschiedlichen Ausführungsbeispielen können für sich eigenständige, erfinderische oder erfindungsgemäße Lösungen darstellen.

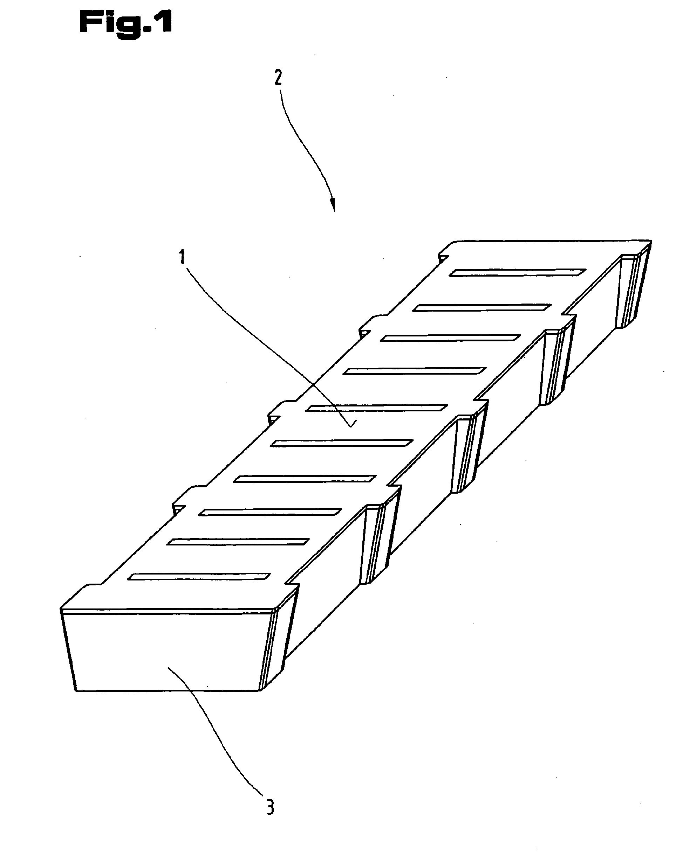

Im folgenden ist eine bevorzugte Ausführungsform des Estrichs und seine Verwendung für ein Spaltenbodenelement detailliert beschrieben (siehe Figur 1).

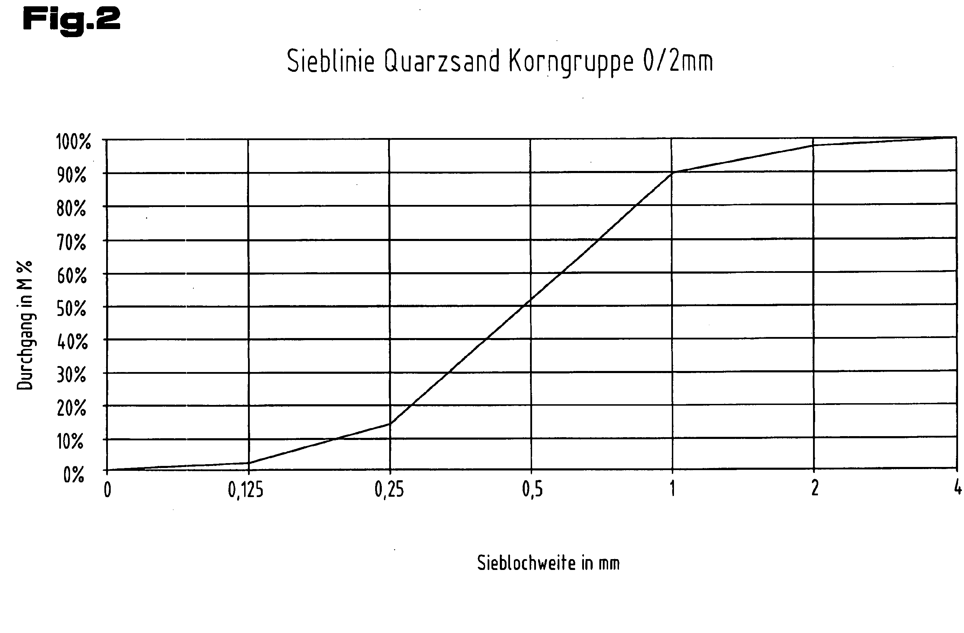

Der Estrich 1 besteht aus einer aushärtbaren Mischung von Zement mit mineralischen und nichtmineralischen Zuschlagstoffen welche unter Zugabe von Wasser zu einem gebrauchsfertigen Estrichmaterial vermengt wird. Als Zement wird vorzugsweise Portlandzement verwendet, es können aber auch andere Zementsorten, wie z.B. Hochofenzement, verwendet werden. Der Zementanteil beträgt vorteilhaft zwischen 400 kg/m³ und 500 kg/m³, insbesondere zwischen 440 kg/m³ und 460 kg/m³ der Estrichmasse. Die Zuschlagstoffe bestehen zu 85 Vol.-% aus gebrochenem Quarzsand mit einer Korngröße zwischen 0,01 mm und 4 mm sowie 15 Vol.-% Gummigranulat mit einer Korngröße zwischen 1 mm und 4 mm. Zumindest ein Teil des Quarzsandes kann durch Sand aus anderer Zusammensetzung, wie z.B. Kalkstein oder Bims ersetzt sein. Die Korngrößenverteilung des verwendeten Sands kann vorteilhaft auch den handelsüblichen Korngruppen 0/2 mm und 0/4 mm entsprechen. Weiters kann die Korngrößenverteilung des verwendeten Sandes insbesondere auch durch seine Sieblinie gekennzeichnet sein, wobei eine Korngrößenverteilung gemäß der Sieblinie in Figur 2 typisch ist.

Das Gummigranulat ist vorzugsweise Recyclingmaterial, das beim Abfräsen von gebrauchten LKW-Reifen entsteht und ist weitgehend frei von Gewebefasern und Stahldrahtanteilen, es kann aber auch gleichwertiges, auf andere Weise hergestelltes Gummigranulat enthalten sein. Weiters kann zumindest ein Teil des Gummigranulats durch Granulat aus anderen Elastomeren ersetzt sein. Die Form der einzelnen Gummigranulatteilchen ist bevorzugt würfelig oder kugelig, es können aber auch längliche Teilchen mit einer Länge, die zumindest dem Dreifachen der Breite bzw. Dicke der Teilchen entspricht, enthalten sein.

Zur Verbesserung der mechanischen Eigenschaften enthält der Estrich 1 pro Kubikmeter 1 kg Polypropylenfasern als Betonzusatzstoff. Diese Fasern mit Dicken von 0,02 mm bis 0,05 mm sowie Längen von 5 mm bis 25 mm bestehen aus isotaktischem Polypropylen und werden z.B. im Schmelzspinnverfahren herstellt.

Die mit dem Zement vermischten Zuschlagstoffe werden unter Zugabe von Wasser zu einem verarbeitungsfähigen Estrich 1 vermischt. Die Menge des zugegebenen Wassers entspricht dabei etwa dem 0,3 bis 0,6-fachen, vorzugsweise dem 0,45 bis 0,55-fachen, bevorzugt dem 0,5-fachen der Masse des verwendeten Zements.

Zur farblichen Gestaltung des Estrichs 1 können auch Farbpigmente die den Zementleim färben oder gefärbte Zuschlagstoffe wie z.B. granulierte, färbige Kunststoffabfälle oder färbiger Kies beigemischt werden. Durch ein nachträgliches Schleifen solcher Estriche können besonders interessante, optische Effekte erzielt werden, wie z.B. ein so genannter Terrazzo-Effekt.

Als zusätzliche Bestandteile können für besondere Anwendungsfälle noch weitere Betonzusatzstoffe und als Betonzusatzmittel beispielsweise Verzögerer, Beschleuniger, Verflüssiger, Porenbildner beigemengt werden.

Der verarbeitungsfertige Estrich 1 wird auf der Oberseite eines Betonspaltenbodenelements 2 aufgebracht, gleichmäßig verteilt und verdichtet. Zweckmäßigerweise erfolgt dieser Auftrag im Zweischicht-Verfahren gleich im Zuge der Herstellung der Betonspaltenbodenelemente 2, indem im Anschluss an das Einbringen und Verdichten des Unterbetons 3 in den Herstellformen als Nutzschicht auf der Oberseite des Unterbetons 3 der erfindungsgemäße Estrich 1 aufgebracht, abgezogen und verdichtet wird. Es ist jedoch auch möglich, den Estrich 1 auch auf anders geformte Fertigbetonteile oder sonstige Betonböden aufzubringen.

Wenn die Oberfläche des Untergrundes durch Reinigung und Befeuchtung oder Auftrag von Haftvermittlern vorbehandelt ist, kann der Estrich auch nachträglich aufgebracht werden. Die Schichtdicke für den Estrich wird zwischen 4 mm und 20 mm gewählt, wobei Schichtdicken von 4 mm bis 10 mm aufgrund des sparsamen Materialverbrauchs bevorzugt angewendet werden.

Zur Erhöhung der Rutschfestigkeit kann die Oberfläche des Estrichs noch zusätzliche Profilierungen aufweisen, die entweder im noch nicht ausgehärteten Estrich eingebracht oder nachträglich im ausgehärteten Estrich z.B. durch Fräsen eingearbeitet sind.

Die in den einzelnen Mengenangaben verwendeten Bereiche sind jeweils als mögliche obere und untere Grenzen zu verstehen.

An dieser Stelle sei noch bemerkt, dass die Erfindung nicht auf die speziell beschriebene Ausführungsvariante derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der beschriebenen Ausführungsvariante möglich sind, vom Schutzumfang mitumfasst.

Der Ordnung halber sei abschließend darauf hingewiesen, dass das Spaltenbodenelement in Figur 1 bzw. dessen Bestandteile teilweise unmaßstäblich und/oder vergrößert und/oder verkleinert dargestellt wurden.

Die den eigenständigen erfmderischen Lösungen zugrunde liegende Aufgabe kann der Beschreibung entnommen werden.

### Bezugszeichenaufstellung

- 1: Estrich
- 2: Betonspaltenbodenelement
- 3: Unterbeton

## Patentansprüche

1. Verwendung einer Formulierung zur Herstellung eines Estrichs für Stallungen, mit einem hydraulischen Bindemittel, insbesondere Zement, enthaltend zumindest die Zuschlagstoffe Sand und Gummigranulat sowie Fasern, **dadurch gekennzeichnet, dass** der verwendete Sand ein Quarzsand ist, der eine Korngröße zwischen 0 und 4 mm, insbesondere zwischen 0,05 und 3,5 mm, vorzugsweise 0,1 und 2,5 mm aufweist.

2. Verwendung nach Anspruch 1, **dadurch gekennzeichnet, dass** der Quarzsand aus gebrochenem Korn besteht.

3. Verwendung nach Anspruch 1 oder 2, **dadurch gekennzeichnet, dass** das Gummigranulat eine Korngröße kleiner als 10 mm, insbesondere zwischen 1 mm und 4 mm auf weist.

4. Verwendung nach einem der Ansprüche 1 bis 3, **dadurch gekennzeichnet, dass** der Volumenanteil des Gummigranulats zwischen 5 % und 25 %, insbesondere zwischen 10 % und 20 %, vorzugsweise 15 % beträgt.

5. Verwendung nach einem der Ansprüche 1 bis 4, **dadurch gekennzeichnet, dass** das Gummigranulat aus gebrauchten Fahrzeugreifen hergestellt ist.

6. Verwendung nach einem der Ansprüche 1 bis 5, **dadurch gekennzeichnet, dass** das Gummigranulat zumindest weitgehend frei von Gewebeanteilen und / oder Stahldrahtanteilen ist.

7. Verwendung nach einem der Ansprüche 1 bis 6, **dadurch gekennzeichnet, dass** die Fasern aus Polypropylen bestehen.

8. Verwendung nach einem der Ansprüche 7, **dadurch gekennzeichnet, dass** pro Kubikmeter gebrauchsfertiger Estrichmischung 0,6 bis 1,2 kg, insbesondere 0,9 bis 1,1 kg, vorzugsweise 1 kg Fasern aus Polypropylen enthalten sind.

9. Verwendung nach einem der Ansprüche 1 bis 8, **dadurch gekennzeichnet, dass** der Formulierung Wasser in einer Menge zugesetzt wird, die dem etwa 0,3 bis 0,6 fachen der Masse des verwendeten Zements entspricht.

10. Verwendung nach Anspruch 9, **dadurch gekennzeichnet, dass** der Estrich im eingebauten Zustand eine Schichtdicke von 4 mm bis 20 mm, insbesondere 4 bis 10 mm aufweist.

11. Verwendung nach Anspruch 9 oder 10, **dadurch gekennzeichnet, dass** der Estrich als Nutzschicht auf einem Spaltenbodenelement für die Tierhaltung aufgebracht ist.

12. Verwendung nach einem der Ansprüche 9 bis 11, **dadurch gekennzeichnet, dass** die Oberfläche des Estrichs durch Rillen profiliert ist.

13. Spaltenbodenelement aus Beton für die Tierhaltung, wobei auf dem Beton eine obere Nutzschicht aus einem Estrich mit einem hydraulischen Bindemittel, insbesondere Zement, enthaltend zumindest die Zuschlagstoffe Sand und Gummigranulat sowie Fasern gebildet ist, **dadurch gekennzeichnet, dass** der verwendete Sand ein Quarzsand ist, der eine Korngröße zwischen 0 und 4 mm, insbesondere zwischen 0,05 und 3,5 mm, vorzugsweise 0,1 und 2,5 mm aufweist.

14. Spaltenbodenelement nach Anspruch 13, **dadurch gekennzeichnet, dass** der Quarzsand aus gebrochenem Korn besteht.

15. Spaltenbodenelement nach Anspruch 13 oder 14, **dadurch gekennzeichnet, dass** das Gummigranulat eine Korngröße kleiner als 10 mm, insbesondere zwischen 1 mm und 4 mm aufweist.

16. Spaltenbodenelement nach einem der Ansprüche 13 bis 15, **dadurch gekennzeichnet, dass** der Volumenanteil des Gummigranulats zwischen 5 % und 25 %, insbesondere zwischen 10 % und 20 %, vorzugsweise 15 % beträgt.

17. Spaltenbodenelement nach einem der Ansprüche 13 bis 16, **dadurch gekennzeichnet, dass** das Gummigranulat aus gebrauchten Fahrzeugreifen hergestellt ist.

18. Spaltenbodenelement nach einem der Ansprüche 13 bis 17, **dadurch gekennzeichnet, dass** das Gummigranulat zumindest weitgehend frei von Gewebeanteilen und / oder Stahldrahtanteilen ist.

19. Spaltenbodenelement nach einem der Ansprüche 13 bis 18, **dadurch gekennzeichnet, dass** die Fasern aus Polypropylen bestehen.

20. Spaltenbodenelement nach einem der Ansprüche 13 bis 19, **dadurch gekennzeichnet, dass** pro Kubikmeter gebrauchsfertiger Estrichmischung 0,6 bis 1,2 kg, insbesondere 0,9 bis 1,1 kg, vorzugsweise 1 kg Fasern aus Polypropylen enthalten sind.

21. Spaltenbodenelement nach einem der Ansprüche 13 bis 20, **dadurch gekennzeichnet, dass** der Estrich im eingebauten Zustand eine Schichtdicke von 4 mm bis 20 mm, insbesondere 4 bis 10 mm aufweist.

22. Spalfenbodenelement nach einem der Ansprüche 13 bis 21, **dadurch gekennzeichnet, dass** die Oberfläche des Estrichs durch Rillen profiliert ist.

23. Spaltenbodenelement nach Anspruch 13 bis 20, **dadurch gekennzeichnet, dass** der Estrich im 2-Schichtverfahren auf dem Beton aufgetragen ist.

## Claims

1. Use of a formulation to produce a screed for stables, with a hydraulic binding agent, in particular cement, containing at least additives in the form of sand and rubber granules as well as fibres, **characterised in that** the sand used is a quartz sand with a grain size of between 0 and 4 mm, in particular between 0.05 and 3.5 mm, preferably 0.1 and 2.5 mm.

2. Use as claimed in claim 1, **characterised in that** the quartz sand comprises broken grains.

3. Use as claimed in claim 1 or 2, **characterised in that** the rubber granules have a grain size of less than 10 mm, in particular between 1 mm and 4 mm.

4. Use as claimed in one of claims 1 to 3, **characterised in that** the proportion by volume of rubber granules is between 5 % and 25 %, in particular between 10 % and 20 %, preferably 15 %.

5. Use as claimed in one of claims 1 to 4, **characterised in that** the rubber granules are produced from used vehicle tyres.

6. Use as claimed in one of claims 1 to 5, **characterised in that** the rubber granules are largely free of woven textile elements and/or steel wire elements.

7. Use as claimed in one of claims 1 to 6, **characterised in that** the fibres are made from polypropylene.

8. Use as claimed in claim 7, **characterised in that** the ready to use screed mixture contains 0.6 to 1.2 kg, in particular 0.9 to 1.1 kg, preferably 1 kg, of polypropylene fibres per cubic metre.

9. Use as claimed in one of claims 1 to 8, **characterised in that** water is added to the formulation in a quantity corresponding to approximately 0.3 to 0.6 times the mass of the cement used.

10. Use as claimed in claim 9, **characterised in that** the screed has a coating thickness of 4 mm to 20 mm, in particular 4 mm to 10 mm, in the applied state.

11. Use as claimed in claim 9 or 10, **characterised in that** the screed is applied to a slatted floor element for accommodating animals in the form of a top layer.

12. Use as claimed in one of claims 9 to 11, **characterised in that** the surface of the screed is profiled with grooves.

13. Slatted floor element of concrete for accommodating animals, to which a top useful layer of screed containing a hydraulic binding agent, in particular cement, is applied, containing at least additives in the form of sand and rubber granules as well as fibres, **characterised in that** the sand used is a quartz sand, which has a grain size of between 0 and 4 mm, in particular between 0.05 and 3.5 mm, preferably 0.1 and 2.5 mm.

14. Slatted floor element as claimed in claim 13, **characterised in that** the quartz sand comprises broken grains.

15. Slatted floor element as claimed in claim 13 or 14, **characterised in that** the rubber granules have a grain size of less than 10 mm, in particular between 1 and 4 mm.

16. Slatted floor element as claimed in one of claims 13 to 15, **characterised in that** the proportion by volume of rubber granules is between 5 % and 25 %, in particular between 10 % and 20 %, preferably 15 %.

17. Slatted floor element as claimed in one of claims 13 to 16, **characterised in that** the rubber granules are produced from used vehicle tyres.

18. Slatted floor element as claimed in one of claims 13 to 17, **characterised in that** the rubber granules are at least largely free of woven textile elements and/or steel wire elements.

19. Slatted floor element as claimed in one of claims 13 to 18, **characterised in that** the fibres are made from polypropylene.

20. Slatted floor element as claimed in one of claims 13 to 19, **characterised in that** the ready to use screed mixtures contains 0.6 to 1.2 kg, in particular 0.9 to 1.1 kg, pref erably 1 kg, of polypropylene fibres per cubic metre.

21. Slatted floor element as claimed in one of claims 13 to 20, **characterised in that** the screed has a coating a thickness of 4 mm to 20 mm, in particular 4 mm to 10 mm, in the applied state.

22. Slatted floor element as claimed in one of claims 13 to 21, **characterised in that** the surface of the screed is profiled with grooves.

23. Slatted floor element as claimed in claims 13 to 20, **characterised in that** the screed is applied to the concrete by the 2-coat method.

## Revendications

1. Utilisation d'une formulation pour la fabrication d'une chape pour des étables, avec un liant hydraulique, en particulier du ciment, contenant au moins les charges de sable et de granulé de caoutchouc, ainsi que des fibres, **caractérisée en ce que** le sable utilisé est un sable de quartz qui présente une granulométrie entre 0 et 4 mm, en particulier entre 0,05 et 3,5 mm, de préférence entre 0,1 et 2,5 mm.

2. Utilisation selon la revendication 1, **caractérisée en ce que** le sable de quartz consiste en des grains cassés.

3. Utilisation selon la revendication 1 ou 2, **caractérisée en ce que** le granulé de caoutchouc présente une granulométrie inférieure à 10 mm, en particulier comprise entre 1 mm et 4 mm.

4. Utilisation selon l'une quelconque des revendications 1 à 3, **caractérisée en ce que** la part volumique du granulé de caoutchouc est comprise entre 5 % et 25 %, en particulier entre 10 % et 20 %, de préférence 15 %.

5. Utilisation selon l'une quelconque des revendications 1 à 4, **caractérisée en ce que** le granulé de caoutchouc est produit à partir de pneus de véhicule usagés.

6. Utilisation selon l'une quelconque des revendications 1 à 5, **caractérisée en ce que** le granulé de caoutchouc est au moins dans une large mesure exempt de parts de textile et/ou de parts de fils d'acier.

7. Utilisation selon l'une quelconque des revendications 1 à 6, **caractérisée en ce que** les fibres consistent en polypropylène.

8. Utilisation selon la revendication 7, **caractérisée en ce que** par mètre cube de mélange à chape prêt à l'emploi, sont contenus 0,6 à 1,2 kg, en particulier 0,9 à 1,1 kg, de préférence 1 kg de fibres de polypropylène.

9. Utilisation selon l'une quelconque des revendications 1 à 8, **caractérisée en ce que** de l'eau est ajoutée à la formulation en une quantité qui correspond à environ 0,3 à 0,6 fois la masse du ciment utilisé.

10. Utilisation selon la revendication 9, **caractérisée en ce que** la chape présente à l'état monté une épaisseur de couche de 4 mm à 20 mm, en particulier de 4 à 10 mm.

11. Utilisation selon la revendication 9 ou 10, **caractérisée en ce que** la chape est appliquée comme couche utile sur un plancher en grille pour l'élevage d'animaux.

12. Utilisation selon l'une quelconque des revendications 9 à 11, **caractérisée en ce que** la surface de la chape est profilée par des rainures.

13. Plancher en grille en béton pour l'élevage d'animaux, sachant que sur le béton, une couche utile supérieure est constituée d'une chape avec un liant hydraulique, en particulier du ciment, contenant au moins les charges de sable et de granulé de caoutchouc, ainsi que des fibres, **caractérisé en ce que** le sable utilisé est un sable de quartz qui présente une granulométrie entre 0 et 4 mm, en particulier entre 0,05 et 3,5 mm, de préférence entre 0,1 et 2,5 mm.

14. Plancher en grille selon la revendication 13, **caractérisé en ce que** le sable de quartz consiste en des grains cassés.

15. Plancher en grille selon la revendication 13 ou 14, **caractérisé en ce que** le granulé de caoutchouc présente une granulométrie inférieure à 10 mm, en particulier comprise entre 1 mm et 4 mm.

16. Plancher en grille selon l'une quelconque des revendications 13 à 15, **caractérisé en ce que** la part volumique du granulé de caoutchouc est comprise entre 5 % et 25 %, en particulier entre 10 % et 20 %, de préférence 15 %.

17. Plancher en grille selon l'une quelconque des revendications 13 à 16, **caractérisé en ce que** le granulé de caoutchouc est produit à partir de pneus de véhicule usagés.

18. Plancher en grille selon l'une quelconque des revendications 13 à 17, **caractérisé en ce que** le granulé de caoutchouc est au moins dans une large mesure exempt de parts de textile et/ou de parts de fils d'acier.

19. Plancher en grille selon l'une quelconque des revendications 13 à 18, **caractérisé en ce que** les fibres consistent en polypropylène.

20. Plancher en grille selon l'une quelconque des revendications 13 à 19, **caractérisé en ce que** par mètre cube de mélange à chape prêt à l'emploi, sont contenus 0,6 à 1,2 kg, en particulier 0,9 à 1,1 kg, de préférence 1 kg de fibres de polypropylène.

21. Plancher en grille selon l'une quelconque des revendications 13 à 20, **caractérisé en ce que** la chape présente à l'état monté une épaisseur de couche de 4 mm à 20 mm, en particulier de 4 à 10 mm.

22. Plancher en grille selon l'une quelconque des revendications 13 à 21, **caractérisé en ce que** la surface de la chape est profilée par des rainures.

23. Plancher en grille selon les revendications 13 à 20, **caractérisé en ce que** la chape est appliquée sur le béton selon un procédé à 2 couches.
